# EUROPEAN PATENT APPLICATION

(11) **EP 4 454 806 A1**
(43) Date of publication of application: **30.10.2024**
(21) Application number: 24150590.8
(22) Date of filing: 05.01.2024
(51) Int. Cl.: B23Q 1/03, B23Q 3/08, B25B 11/00

(54) **WORKTABLE FOR A MACHINE TOOL**

(30) Priority: 24.04.2023 IT 202300008004
(71) Applicant: FIMAC S.p.A., 20030 Senago (MI) (IT)
(72) Inventor: DE COSMO, Michele, 10141 TORINO (IT); MAZZARELLA, Pietro, 21042 CARONNO PERTUSELLA VA (IT); LUISI, Donato, 28069 TRECATE NO (IT); CATALDO, Giovanni, 20158 MILANO (IT)
(74) Representative: Modiano, Micaela Nadia

(57) **Abstract**

A worktable (1) for a machine tool, comprising a plurality of suction ports (2) adapted to allow the creation of a vacuum in order to aspirate a workpiece deposited on the upper surface of the worktable, caps (5) being provided for closing suction ports (2) that are to be rendered inactive; each one of the caps (6) comprises a floating O-ring (7), adapted to be arranged around the cap (6), the floating O-ring (7) being adapted to pass from an inactive position, in which the floating O-ring (7) keeps the cap (6) raised with respect to the surface of the worktable, to an active position, in which the floating O-ring (7) is arranged so that the cap is level with the surface of the worktable, in order to close the corresponding suction port (6).

## Description

The present invention relates to a worktable for a machine tool. More specifically, the invention relates to a suction worktable for a machine tool, which is adapted to hold a workpiece in place on the table.

As is known, machine tools are generally provided with a worktable that makes it possible to position a workpiece and to carry out machining on it. In order to keep the workpiece immobile, solutions are known wherein the worktable is a surface of the suction type, i.e. it is provided with a vacuum line, a vacuum pump, a compressed air supply, a control unit, a pressure generator, a clearance/alarm signal, all of which make it possible to create a vacuum below the worktable so as to hold the workpiece in place, since the surface is conveniently perforated and the vacuum is provided through the holes.

The general operation of a table of this type is the following. The suction surface is fixed to a worktable of the machine tool. The vacuum pump is fed by an industrial compressed air line which generates a high degree of vacuum between the suction surface and the material being machined, through the vacuum line, and expels the unwanted air flows through the line.

During operation, the control unit monitors the vacuum transducer in real time, producing an electronic signal on the line for clearing machining operations/signaling an alarm, and immediately suspends machining as a function of the level of vacuum that ensures an effective hold of the material being machined.

Existing worktables can have a modular suction port system, in which the region where the workpiece is to be placed is delimited by a line of elastomeric material used for O-rings, which is laid in modular hollows.

In this embodiment, the surface must be configured in each instance to surround, with the line of elastomeric material, the machining region in which the workpiece will effectively be placed, so excluding the remaining regions from the vacuum.

This embodiment is not very practical however, since it is necessary, in each instance, to redefine the machining region by redeploying the line of elastomeric material on which the workpiece will be placed and below which the vacuum will be created.

An alternative embodiment is to provide, for each type of workpiece, a dedicated suction surface, i.e., one configured with the exact shape of the workpiece so as not to have suction regions that are not covered by the workpiece, and which therefore must be excluded somehow.

This embodiment is not advantageous in that, obviously, providing a dedicated surface for every workpiece is extremely expensive.

An additional embodiment has a modular system of suction ports, in which each suction port is delimited by an O-ring which is accommodated in a suitable seat, on which the workpiece is placed.

In these embodiments, the O-rings are fully accommodated in the seat and the workpiece needs to be held in position by the user before the vacuum is created, so as to be certain that the workpiece will not move.

The suction ports need to be activated, and outside of the contour of the workpiece they are closed with threaded caps that are engaged by screwing into the cavity of the suction port, so as to render the suction port inactive.

The screw cap embodiment obviously requires time for screwing and unscrewing by the operator, in order to deselect or select the desired suction port, in order to create an outline of the workpiece that matches the shape of the workpiece in question.

The aim of the present invention is to provide a worktable for a machine tool that makes it possible to select rapidly and with certainty the work region that is intended to be subjected to suction, without the help of any utensil.

Within this aim, an object of the present invention is to provide a worktable for a machine tool, in which the placing of the workpiece on the surface and its positioning are certain and guaranteed, without the user needing to ensure that the workpiece adheres to the worktable.

Another object of the present invention is to provide a worktable for a machine tool, in which the selection and deselection of the regions of the surface to be activated and subjected to vacuum is done rapidly and safely.

Another object of the present invention is to provide a worktable for a machine tool that is highly reliable, easily and practically implemented, and at low cost.

This aim and these and other objects which will become better apparent hereinafter are achieved by a worktable for a machine tool, comprising a plurality of suction ports adapted to allow the creation of a vacuum in order to aspirate a workpiece deposited on the upper surface of said worktable, caps being provided for closing suction ports that are to be rendered inactive, characterized in that each one of said caps comprises a floating O-ring, adapted to be arranged around the cap, said floating O-ring being adapted to pass from an inactive position, in which said floating O-ring keeps the cap raised with respect to the surface of said worktable, to an active position, in which said O-ring is arranged so that said cap is level with the surface of said worktable, in order to close the corresponding suction port.

Further characteristics and advantages of the invention will become better apparent from the description of a preferred, but not exclusive, embodiment of the worktable according to the present invention, which is illustrated by way of non-limiting example in the accompanying drawings wherein:

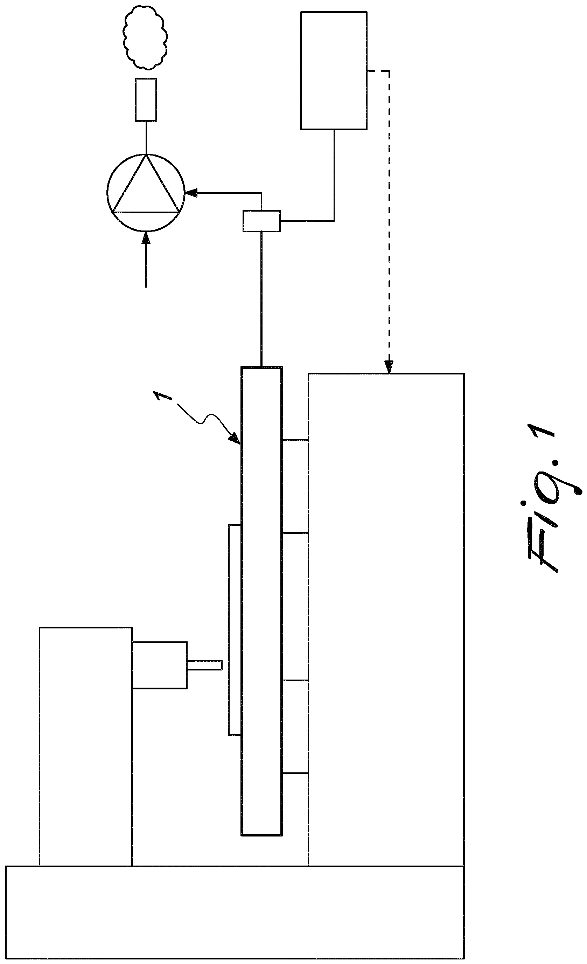

Figure 1 shows a worktable according to the present invention applied to a generic machine tool;

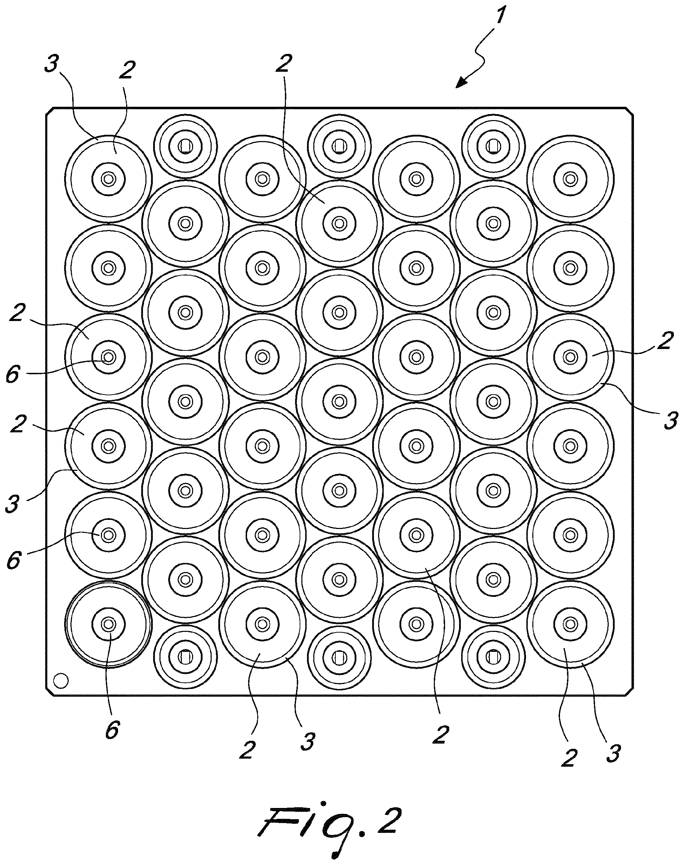

Figure 2 is a plan view from above of the worktable according to the present invention;

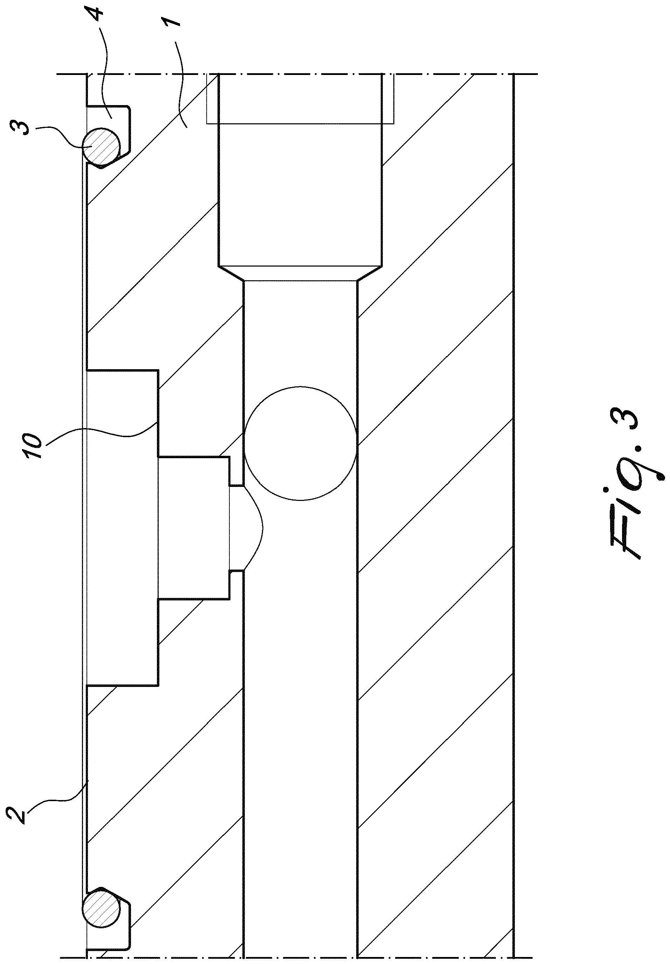

Figure 3 is a transverse cross-sectional view of the worktable according to the present invention in the inactive condition;

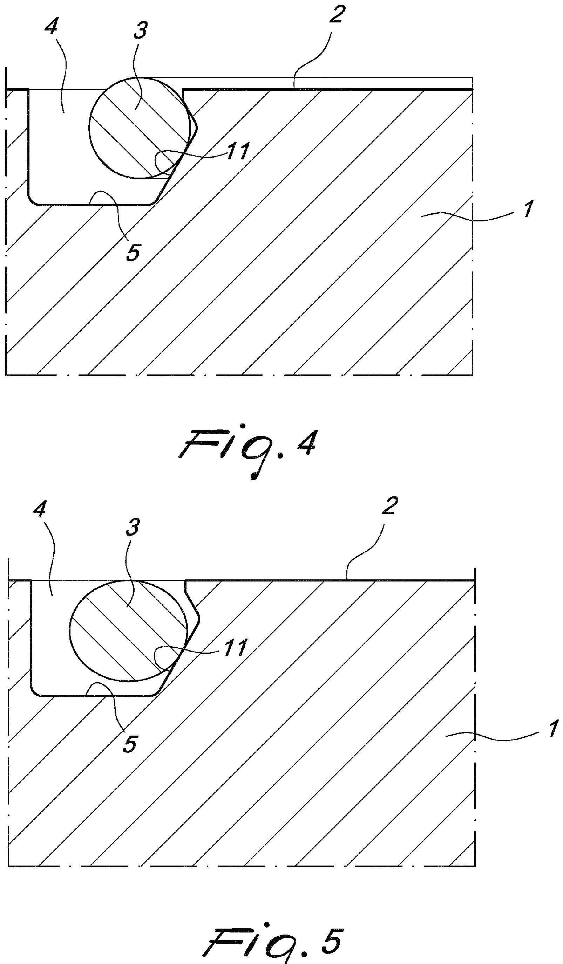

Figure 4 is a detail of the worktable shown in Figure 3;
Figure 5 is the same detail view as Figure 4 but in the operating condition, of activation of the vacuum;

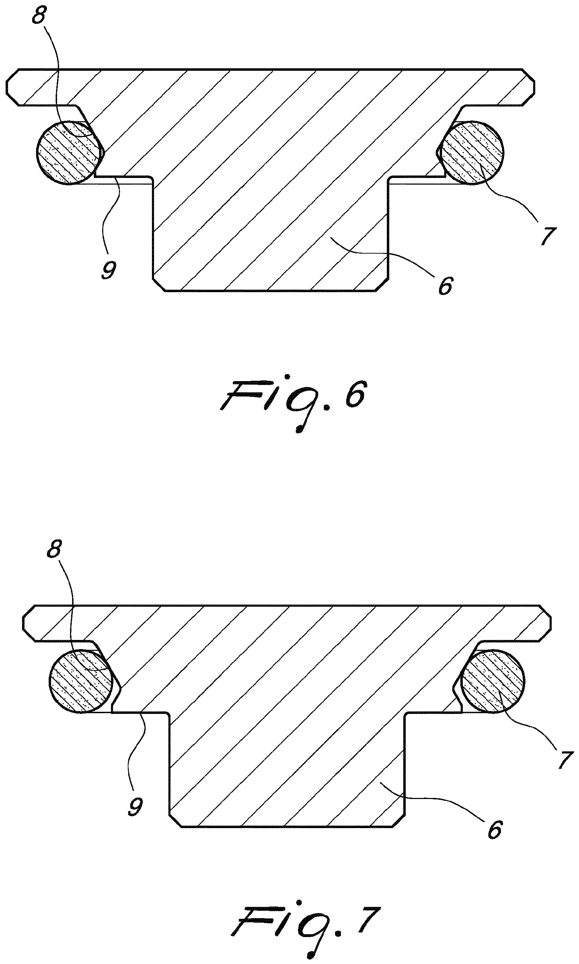

Figure 6 is a cross-sectional view of a cap of the worktable according to the invention, in the inactive condition;
Figure 7 is a cross-sectional view of the cap of Figure 6, in the operating condition.

With reference to the figures, the worktable for a machine tool according to the present invention, generally designated by the reference numeral 1, comprises a plurality of suction ports 2, each one delimited by an O-ring 3.

Conveniently, the O-ring 3 is accommodated in a seat 4, defined in the surface 1 and shaped so as to have a flat back wall 5 and a side wall 11 with a change of inclination, so as to define the position for accommodating the O-ring 3.

In substance, when inactive, the O-ring 3 stands slightly out of the worktable 1, thus ensuring a certain contact with the surface of a workpiece and avoiding the need for the operator to ensure that the workpiece adheres to the worktable 1.

When the vacuum is applied, the workpiece is pressed (pulled) toward the worktable 1, and the O-ring 3 yields to its movement, shifting vertically in the seat 4 which, because it has a conical profile, spreads the O-ring along the circumference, squashing it and therefore deforming it, so that it passes from a circular cross-section to an elliptical cross-section.

When the vacuum ceases, and after the workpiece is removed, the O-ring 3, by an elastic effect, contracts on the conical seat 5, shifting vertically and repositioning itself autonomously to its inactive position, ready for successive machining operations.

In order to define an area of the worktable 1 that is to be effectively activated by applying vacuum, so that the workpiece covers only that given area, caps are provided which make it possible to exclude the suction ports that need not be activated to create the vacuum, because they are not covered by the workpiece.

Conveniently, the caps, designated by the reference numeral 6, are of the self-locking type, i.e., without threading, but provided with a floating O-ring 7, on a conical seat 8 of the cap. In this manner, when the vacuum is applied to the worktable 1, those areas unaffected by the workpiece, but where suction ports 2 are present, are also subjected to a suction action which, in this case, brings the O-ring 7 of each cap 6 into abutment against its seat, and therefore holding it there, and preventing the area of the suction port in question from becoming an active area.

The conical seat 8 of the cap 6 is defined by a side wall with a change of angle.

The cap therefore makes it possible to exclude a suction port that does not need to be activated, and this exclusion occurs not with a threaded cap, but with a cap with a floating O-ring on a conical seat 8.

In the inactive position, the O-ring 7 droops slightly from the edge 9 of the cap and abuts against a step 10 which is defined in the seat in which the cap 6 is to be accommodated.

Following the application of the vacuum, the O-ring 7 moves to the conical seat 8 of the cap 6, thus ensuring that the cap 6 comes perfectly level with the upper surface of the worktable 1, in so doing closing the underlying suction port, rendering it inactive.

In practice it has been found that the worktable according to the present invention fully achieves the set aim and objects, in that it makes it possible to render regions of the worktable inactive using caps that block the suction ports that create the vacuum, without these caps being threaded, instead using caps with a floating O-ring.

This solution makes it possible to greatly speed up the action of closing the suction ports that are unaffected by the machining operation, since it is not necessary to manually screw each cap into the respective suction port, and instead it is sufficient to leave the caps positioned in the respective suction ports, and quickly remove them if the suction port needs to be made active, or leave them in place and apply the vacuum if the cap is to block the suction port that is unaffected by the machining of the workpiece on the worktable.

The worktable thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102023000008004 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A worktable (1) for a machine tool, comprising a plurality of suction ports (2) adapted to allow the creation of a vacuum in order to aspirate a workpiece deposited on the upper surface of said worktable (1), caps (6) being provided for closing suction ports (2) that are to be rendered inactive, **characterized in that** each one of said caps (6) comprises a floating O-ring (7), adapted to be arranged around the cap (6), said floating O-ring (7) being adapted to pass from an inactive position, in which said floating O-ring (7) keeps the cap (6) raised with respect to the surface of said worktable (1), to an active position, in which said floating O-ring (7) is arranged so that said cap (6) is level with the surface of said worktable (1), in order to close the corresponding suction port (2).

2. The worktable according to claim 1, **characterized in that** said cap (6) has a conical seat (8), adapted to receive said floating O-ring (7).

3. The worktable according to claim 1 or 2, **characterized in that** said conical seat (8) is defined by a side wall with a change of angle.

4. The worktable according to claim 1, **characterized in that** said suction ports (2) are each delimited by an O-ring (3) accommodated in a conical seat (4).

5. The worktable according to claim 4, **characterized in that** said conical seat (4) is defined by a back wall (5) and a side wall (11) with a change of angle.

6. The worktable according to claim 3, **characterized in that** said O-ring (3) of each one of said suction ports (2) is configured to pass from an inactive condition, in which said O-ring (3) protrudes from said surface of said worktable (1), to an active position, in which said O-ring (3) is arranged level with said surface of said worktable (1), and in which said O-ring (3) is deformed as a result of contact with the workpiece arranged on the surface of the worktable (1).
